# EUROPEAN PATENT APPLICATION

(11) **EP 1 721 948 A2**
(43) Date of publication of application: **15.11.2006**
(21) Application number: 06009413.3
(22) Date of filing: 08.05.2006
(51) Int. Cl.: C09D 201/10, C09D 175/04, C09D 163/00, C08G 18/10, C08G 18/77, C08G 18/48, C08L 101/10

(54) **Silylated polyurethane moisture cured doming resins**

(30) Priority: 09.05.2005 US 124077
(71) Applicant: Chemque, Incorporated, Ontario M9W 5X1 (CA)
(72) Inventor: Foucher, Daniel, Toronto, Ontario M6G 3M1 (CA); Deng, Yuan, Toronto, Ontario M1R 2V8 (CA); Botrie, Alex, Toronto, Ontario M5E 1T4 (CA); Cooke, Jeffrey, Etobicoke, Ontario M9P 3R2 (CA)
(74) Representative: Tombling, Adrian George

(57) **Abstract**

A one component, moisture-cure, colorless or colored, protective or decorative high-build lensing or doming resin system is described. Use of these polymer systems have the advantage of eliminating the mixing, handling, and high toxicity associated with standard two-component epoxy or polyurethane lensing resins, or one-component ultraviolet cured systems.

## Description

### FIELD OF THE INVENTION

The invention relates to moisture cured doming resins prepared with silylated polymers.

### BACKGROUND OF THE INVENTION

It is known to cast a two-component, clear polyurethane or epoxy resin upon a substrate to produce a decorative emblem. The cast polymer, when cured, gives a lens effect to the surface it is applied to. (See, for example, U.S. Pat. No. 4,100,010 & RE. 33,175.) Such a polyurethane or epoxy is commonly referred to as "doming" or "lensing" resins.

Historically, substances such as high melting enamels were used to create the doming effect; however, molded or poured-on plastics have become a more popular method of achieving this effect.

Doming or lensing resins are typically clear, colorless, high gloss, room temperature or elevated temperature curing, thermosetting systems developed to provide aesthetic enhancement and environmental protection to objects such as (but not limited to) labels, decals, plaques, badges, name plates, lapel pins, automotive ornamentation, and automotive dashboards to form a durable three-dimensional lens effect.

In order for a liquid doming resin to achieve the appropriate appearance on an object once it is cured, it should have a number of characteristics intrinsic to both the liquid components and the cured resin. Typically, the formulation is a clear and colorless liquid. The formulation should flow sufficiently to cover the entire surface to which it is applied and should produce a dome from 20 mils (0.5 mm) to 100 mils (2.5 mm) high. It should fully cure within forty-eight hours at 25°C and 50% R.H. The curing of the doming resin formulation should not cause shrinkage, wrinkles, surface defects, curling, or other deviations from a clear, transparent, smooth, high gloss surface. It should not contain volatile solvents (less than 1%). Once cured, the doming resin should maintain its initial hardness and flexibility.

Doming resins are different from protective clearcoats. Doming resins are typically moderately viscous (for example about 1,000 cps), and applied by pouring or careful metering of the resin in thick layers (generally >40 mils) without a solvent carrier. Clearcoats, on the other hand, are relatively free-flowing (viscosities typically < 50 cps), and typically spray, brush, or roller applied in much thinner layers (<5 mils) using solvent or water as a carrier.

Solvents are an integral component of water- and solvent-borne clearcoat formulations, providing control over flow, wetting, coalescing, and drying characteristics. The presence of solvents in a doming resin formulation is generally detrimental; the evaporation of the solvents from the thick layer of viscous material causes shrinkage and surface defects in the form of striations, swirling, or haze, rendering the domed item useless. Thus, the doming resin must be formulated without the advantage of solvents to change the cure rate, tack free time, viscosity, flow characteristics, or other properties of the formulation.

Polyurethane doming resins are also different from polyurethane sealants. Polyurethane sealants are typically very viscous (often much greater than 100,000 cps), hazy or opaque, and normally contain significant inorganic filler content. Polyurethane sealants are usually designed to have relatively high elongation and tensile properties. Doming resins typically have an application viscosity of about 1,000 cps, are generally clear and colorless, filler-free, and cure to a smooth, defect free, flexible or hard substance.

Currently, conventional doming resins, for use in exterior applications, are practically applied as two-component aliphatic polyurethane systems. They may be room temperature cured or cured with heat. Two-component epoxy doming resins are used only in indoor applications.

There are disadvantages with conventional two-component polyurethane systems, especially the need for specialized fluid metering systems to accurately dispense and mix the two reactive components, and special safety precautions necessary due to the inherent toxicity of isocyanate in these formulations. Additionally, the reaction of ambient water vapor, adsorbed moisture on the substrate or carboxyl groups in the raw materials or on the substrate with the isocyanate can cause bubbles to become entrapped in the product, essentially ruining the appearance of the cured decorative resin. Compounds based on the heavy metals; mercury, lead, chromium, cadmium, barium, antimony, arsenic and selenium, are commonly used as catalysts in these polyurethane-based systems. These compounds, e.g. phenyl mercuric acetate, present both safety and environmental concerns.

There are also disadvantages with two-component epoxy systems. They require specialized fluid metering systems to accurately dispense and mix the two reactive components. They also require special safety precautions for both the epoxy resins and amine hardeners.

It is desired to have an effective one-component, moisture-cured system of a low- or non-toxic composition. A single component product would not require the specialized fluid metering and dispensing systems, thus eliminating cost and complexity for the user of the product.

One-component acrylate-based systems that cure by ultra violet radiation are available for doming resins. However these systems are limited because of poor UV resistance, poor adhesion, poor flexibility, and high shrinkage during the curing process. They yellow on exposure to UV light. Generally they can only be used on very small parts and in interior applications. Health concerns over the toxicity and sensitizing properties of acrylate functional monomers and polymers is also a strong disadvantage.

Isocyanate systems are used as moisture-cure, single component systems in application areas such as adhesives and sealants; however, the release of carbon dioxide during curing, and the trapping of the carbon dioxide bubbles in the cured coating prevents any practical use of these types of formulations for clear doming resins.

Moisture-cured silane-terminated polyurethane formulations are also used extensively in the adhesive and sealants market area, where the primary function of the formulation is to join two objects together, seal a crack, crevice or other space or location from penetration by unwanted compounds such as water, while maintaining flexibility and elongation over widely ranging ambient conditions. These formulations are generally opaque, inorganic filler-containing formulations.

Moisture-cured silylated polymers are generally formed by three routes: 1) grafting an aminosilane onto an isocyanate functional polymer wherein the isocyanate functional polymer can be any polymer containing one or more isocyanate groups; 2) grafting an isocyanate-functional silane onto an active-hydrogen-containing polymer wherein the active-hydrogen-containing polymers can be any polymer that contains one or more active hydrogen groups; 3) grafting a vinyl-functional silane or a hydride-functional silane onto a polymer backbone containing unsaturated groups wherein the unsaturated polymer "-can be any polymer containing one or more unsaturation groups.

Alkoxysilane-functional polyurethanes that cross-link via a hydrolysis and subsequent condensation polymerization have long been known in the art. For example, U.S. Pat. No. 3,632,557 teaches the use of primary and secondary aliphatic aminosilanes to completely end cap conventional polyurethane prepolymers. The resulting polymers, after combination with conventional inorganic fillers and other additives, can be used for coating, caulking, and sealing applications. U.S. Pat. No. 3,979,344 details a room temperature curable silicon terminated organic sealant composition comprising a small quantity of 3-(N-2-aminoethyl)aminopropyltrimethoxysilane endcapper to improve the sealant's cure speed.

U.S. Pat. No. 4,857,623 also discloses alkoxysilane terminated moisture-curing polyurethanes that can be formulated, with suitable fillers and other additives, to obtain one-component formulations useful for adhesive and sealant applications.

U.S. Pat. No. 5,554,709 described moisture curing alkoxysilane terminated polyurethanes which are obtained by reacting polyurethane prepolymers with special sulfur-free alkoxysilanes, reacting with substantially all the free NCO groups. Also described is the use of these compounds as sealing and/or adhesive compositions.

Other documents relating to silane end-capped urethane prepolymers are U.S. Pat. No. 4,345,053, U.S. Pat. No. 4,374,237, U.S. Pat. No. 4,628,076, U.S. Pat. No. 4,645,816, U.S. Pat. No. 6,001,946, and U.S. Pat. No. 6,498,210. Additionally, review articles such as Waldman, et al in "Adhesives Age", Volume 4, page 30, 1995 and Mack, in "Adhesives Age" Volume 2, page 35, 2003 teach the synthesis and use of silylated polyurethanes in formulations of adhesives and sealants.

Silylated polyurethanes are thus known as components of opaque, flexible, extensible adhesives and sealants. However, low viscosity, transparent, silylated polyurethanes for use in doming resins or high build, solvent-free coatings are not currently known in the art. There is a need for a one-component doming resin system with acceptable performance, lowered toxicity, and ease of handling.

Moreover, for systems that require a two-part polyurethane or epoxy doming resin, it would be also advantageous to produce a two-component polyurethane or epoxy doming resin with much faster tack-free times. This would allow the domed article to be handled and moved in much less time than is currently possible. It would also prevent dust and dirt from settling on the dome, thus detracting from its appearance.

### BRIEF SUMMARY OF THE INVENTION

It was discovered that silylated polymers having hydrolyzable silane groups grafted on the polymer backbone can be used to form flexible, protective, clear or colored, one-component moisture cured doming resin systems. The hydrolyzeable silane moieties grafted on the polymer backbone can moisture cure to provide smooth, flexible, high gloss, defect-free, domed articles.

The instant invention is directed to a one-part, transparent, moisture-curing doming resin composition comprising a mixture of crosslinkable, hydrolyzable-silane-modified organic polymers; wherein the resin composition has a viscosity between about 100 cps and about 20,000 cps; and wherein the composition forms a coating having a hardness of Shore A 25 to Shore D 90.

In one embodiment, the crosslinkable hydrolyzable-silane-modified organic polymer is prepared by reacting an isocyanate-functional monomer, oligomer, or polymer with at least one hydrolysable silane selected from the group consisting of mono-, di-, or tri-alkoxysilanes, mono-, di-, or tri-aryloxysilanes, mono-, di-, or tri-acetoxysilanes, and mixtures thereof. The hydrolysable silane may be selected from the group consisting of an aminoalkyl trialkoxysilane, aminoalkyl dialkoxysilane, mercaptoalkyl trialkoxysilane, mercaptoalkyl dialkoxysilane and mixtures thereof.

In another embodiment, the crosslinkable hydrolysable-silane-modified organic polymer is prepared by reacting at least one polyol with an isocyanatoalkyl dialkoxysilane, isocyanatoalkyl trialkoxysilane, or mixtures thereof. The polyol may be selected from the group consisting of polyester polyols, polyether polyols, and polyalkyldiene polyols, or the polyol is derived from reaction of an excess of at least one selected from the group consisting of polyester polyols, polyether polyols, and polyalkyldiene polyols, with at least one isocyanate functional compound.

In another embodiment, the crosslinkable, hydrolysable, silane-modified organic polymer is prepared by reacting a hydride-functional mono-, di-, or tri- hydroalkoxy silane or a vinyl silane with an unsaturated monomer, polymer or oligomer.

The composition may further comprise at least one catalyst. And may contain at least one selected from the group consisting of flow agents, viscosity modifiers, foam control agents, plasticizing agents, moisture scavengers, adhesion promoters, temperature stabilizers, and ultraviolet radiation stabilizers.

The composition is essentially clear and can be colorless. Alternatively, an effective amount of at least one colorizing additive may be added.

In a particular embodiment, the composition is solvent-free.

In another embodiment, the hydrolysable silane-modified organic polymer is added to a two-component polyurethane or epoxy polymer composition to produce a tack-free surface in a much shorter time than unmodified two-component polyurethane and epoxy compositions. The hydrolysable silane-modified organic polymer can be present in amounts of 5% and 95% of the total composition.

The hydrolysable silane-modified organic polymer can be a separate polymer added to the isocyanate or polyol of the two-component polyurethane system. Alternatively, the silane can also be reacted directly onto the isocyanate or polyol of a two-component polyurethane composition and thereby partially silylating the polymer to introduce the moisture curing silane to the system.

A method of decreasing cure-time of a two-part polyurethane or epoxy resin composition comprising adding to the composition a sufficient amount of a mixture of crosslinkable hydrolyzable-silane-modified organic polymers to reduce the tack-free time.

The instant invention is also directed to an article comprising a substrate and a transparent coating; wherein the coating is prepared from a one-part doming resin composition comprising a mixture of crosslinkable hydrolyzable-silane-modified organic polymers having a viscosity between about 100 cps and about 20,000 cps; wherein the coating is moisture-cured and has a hardness of Shore A 25 to Shore D 90.

In a further embodiment, the coated composition has a thickness of about 0.5 mm to about 10 mm.

In a further embodiment, the doming resin is poured into a mold, with the article to be domed at the bottom of the mold. The article to be domed can also be placed on top of the molded doming resin.

In a further embodiment, the resin in poured into a mold. The cured resin itself, in the form of the mold, comprising the complete article.

The article may be promotional items or decorative items such as decals, labels, plaques, badges, nameplates, lapel pins, automotive dashboards and construction tiles.

### DETAILED DESCRIPTION OF THE INVENTION

The present invention is directed to a one-part moisture-curing doming resin formulation. The formulation comprises an essentially uniform mixture of crosslinkable, hydrolysable, silane-modified organic polymers. The formulation is used to prepare coatings for application to various articles and molded articles.

The present invention provides coatings that are sufficiently flexible for use on both flexible and rigid articles. The flexibility of the coating is measured by the hardness. Shore D and DO hardnesses are commonly used to measure the harder coatings. Shore A hardness is commonly used to measure more flexible coatings.

The present invention provides coatings useful in both interior and exterior applications. The coatings can be made to possess good UV resistance and good weathering properties. This allows the coatings to provide an attractive, protective coating on articles used in exterior applications.

In one embodiment of this invention, the hydrolysable silane moieties are selected from mono- di- or tri-alkoxysilanes, mono- di- or tri -aryloxysilanes, mono- di- or tri -acetoxysilanes, or mixtures thereof. Preferably, the hydrolysable silane moieties are selected from aminoalkyl trialkoxysilane, aminoalkyl dialkoxysilane, mercaptoalkyl trialkoxysilane, mercaptoalkyl dialkoxysilane or mixtures thereof.

Any hydrogen active organofunctional silane that includes at least one functional group (e.g. hydrogen) that is reactive with an isocyanate group of the polyurethane prepolymer and has at least one silyl group, can be used. Examples of useful silyl groups include alkoxysilyls, aryloxysilyls, alkyloxyiminosilyls, oxime silyls, and aminosilyls. Preferred hydrogen active organofunctional silanes include: aminosilanes (e.g. secondary amino-alkoxysilanes) and mercapto-alkoxysilanes. Examples of suitable aminosilanes include, but are not limited to, phenyl amino propyl trimethoxy silane, methyl amino propyl trimethoxy silane, n-butyl amino propyl trimethoxy silane, t-butyl amino propyl trimethoxy silane, cyclohexyl amino propyl trimethoxy silane, dibutyl maleate amino propyl trimethoxy silane, dibutyl maleate substituted 4-amino 3,3-dimethyl butyl trimethoxy silane, amino propyl triethoxy silane and mixtures thereof, specific examples which include N-methyl-3-amino-2-methylpropyltrimethoxysilane, N-ethyl-3-amino-2-methylpropyltrimethoxysilane, N-ethyl-3-amino-2-methylpropyldiethoxysilane, N-ethyl-3-amino-2-methylpropyltriethoxysilane, N-ethyl-3-amino-2-methylpropyhnethyldimethoxysilane, N-butyl-3-amino-2-methylpropyltrimethoxysilane, 3-(N-methyl-3-amino-1-methyl-1-ethoxy)propyltrimethoxysilane, N-ethyl-4-amino-3,3-dimethylbutyldimethoxymethylsilane, N-ethyl-4-amino-3,3-dimethylbutyltrimethoxysilane, bis-(3-trimethoxysilyl-2-methylpropyl)amine, N-(3'-trimethoxysilylpropyl)-3-amino-2-methylpropyltrimethoxysilane, N,N-bis((3-triethoxysilyl)propyl)amine, N,N-bis((3-tripropoxysilyl)propyl)amine, N-(3-trimethoxysilyl)propyl-3-(N-(3-trimethoxysilyl)-propylamino)propionamide, N-(3-triethoxysilyl)propyl-3-(N-3-triethoxysilyl)-propyl-amino)propionamide, N-(3-trimethoxysilyl)propyl-3-(N-3-triethoxysilyl)-propylamino)propionamide, 3-trimethoxysilylpropyl 3-(N-(3-trimethoxysilyl)-propylamino)-2-methyl propionate, 3-triethoxysilylpropyl 3-(N-(3-triethoxysilyl)-propylamino)-2-methyl propionate, 3-trimethoxysilylpropyl 3-(N-(3-triethoxysilyl)-propylamino)-2-methyl propionate, and N,N'-bis((3-trimethoxysilyl)propyl)amine. Examples of suitable mercapto-alkoxysilanes include but are not limited to 3-mercaptopropyltrimethoxysilane, mercaptomethylmethyldiethoxysilane, 3-mercaptopropylmethyldimethoxysilane and 3-mercaptopropyltriethoxysilane.

The crosslinkable hydrolysable-silane-modified organic polymer is prepared by reacting an isocyanate-functional monomer, oligomer, or polymer with the hydrolysable silane moieties. Typically all or nearly all of the isocyanate functionality on the monomer, oligomer, or polymer is reacted with a hydrolysable silane. This degree of reaction can be checked by monitoring the residual isocyanate functionality by titration or by FTIR. Usually 100% of the isocyanates are reacted with the silane.

To avoid the presence of free isocyanate, typically the amount of silane required to react with 100% of the isocyanates is calculated and then up to 10% excess silane is added. For diisocyanates, two moles of silane react with each mole of isocyanate.

By titrating the polymer containing the isocyanates moiety with a butyl amine solution, one can calculate the amount of isocyanates groups in the polymer. This method is well known by those familiar with the art. The molecular weight of the silane is also known. Therefore, one can easily calculate the amount of silane to be added to achieve the desired results.

The isocyanate-functional monomers, oligomers, or polymers include, but are not limited to, bis-(4-isocyanatocyclohexyl)methane (HMDI). Other examples of isocyanate functional monomers include isophorone diisocyanate (IPDI), hexane diisocyanate (HDI), toluene diisocyanate (TDI), diphenylmethane diisocyanate (MDI, tetramethylxylene diisocyanate (TMXDI), cyclohexane diisocyanate, butane diisocyanate, trimethyl hexamethylene diisocyanate noraboradiene diisocyanate (NDI). Examples of isocyanate functional oligomers include uretdione dimers of HDI, isocyanurate trimers of HDI, IPDI, and TDI, biuret trimers of HDI, IPDI, and TDI, and mixed copolymers thereof. Many other examples of isocyanate functional oligomers are possible, including reactions of the above mentioned isocyanate monomers, dimers, trimers or oligomers with polyols such as the range of poly(alkylene) glycols, polyesters, polybutadienes and polyacrylics.

The isocyanate moieties react with any active hydrogen containing component. Some active hydrogen containing components are water, alcohols, amines, amine polyols, polyether polyols, polyester polyols, polymerized castor oils, hydroxyl terminated polybutadienes, thiols, and mixtures thereof.

In another embodiment, the crosslinkable hydrolyzable-silane-modified organic polymer is prepared by reacting a polyol with an (isocyanatoalkyl) dialkoxysilane, (isocyanatoalkyl)trialkoxysilane, or mixtures thereof. In order to ensure that the reaction goes to completion, typically a slight (1-10% equivalent excess) of polyol is employed.

The polyol may be either one or a combination of polyester polyols, polyether polyols, or polyalkyldiene polyols, or derived from reaction of excess of such polyols, alone or in combination, with isocyanate functional compounds. A preferred polyol is polypropylene oxide based having an average molecular weight of from about 76 to about 10,000, preferably from about 500 to about 8,000.

Even though curing the hydrolyzable silane groups gives off a small amount of a volatile solvent, the silylated polyurethanes can be used to form domed items without the typical swirls or striations associated with solvent-containing doming resin formulations. Thus, the hydrolyzeable silane moieties grafted on the polymer backbone can moisture cure to provide smooth, flexible, high gloss, defect-free, domed articles.

Catalysts, such as organotin catalysts and/or amine catalysts, can be used to increase the rate of the curing reaction. Such organotin compounds include dibutyltin dilaurate, dibutyltin dioctoate, dibutyltin diacetate and other tin carboxylates. Amine catalysts include such compounds as tetraethylene diamine, triethylamine, and aminofunctional organosilanes such as aminopropyl triethoxysilane.

The composition is generally reacted at about 50 to 90 °C, typically about 60 to 75 °C. Reaction temperatures in this range allow the reaction to proceed at a reasonable rate, without the danger of viscosity increases or gelation due to premature crosslinking that higher temperatures might afford.

The composition may also include an effective amount of colorizing additives to provide color effect to the cured formulation. Suitable colorizing additives include, but are not limited to inorganic pigments such as those based on titanium dioxide, iron oxides, lead oxide, calcium carbonate, cobalt alumina hydrate, barium sulfate, zinc oxide, strontium, chrome, copper, or cobalt; or organic colorants such as the phthalocyanines, azos, perylenes, quinacridones, indanthrones, and pyrroles.

Other additives such as flow agents, viscosity modifiers, foam control agents, plasticizing agents, moisture scavengers, adhesion promoters, temperature stabilizers, and/or ultraviolet radiation stabilizers may be added. Flow agents typically include polyether modified organosilicones, such as Silwet® L-7602 or CoatOSil® 3500 surfactant (GE-OSi); DC-57 Additive (Dow Coming); or Tego® Wet 260 additive (Degussa) Viscosity increasing agents may include surface treated silica, while viscosity reducing agents may include plasticizers such as dioctyl phthalate, diisononyl phthalate, and diisodecyl phthalate. Moisture scavengers such as molecular sieves, oxazolidines and/or vinyl trimethoxysilane can also be employed. Adhesion promoters may include organosilanes such as aminopropyltrimethoxysilane, aminopropyltriethoxysilane, aminoethylaminopropyltrimethoxysilane, N-phenyl aminopropyltrimethoxysilane, glycidoxypropyltrimethoxysilane, (epoxycyclohexyl)ethyltrimethoxysilane; phosphate, titanate or chromium esters, and zinc compounds. Examples of temperature stabilizers and ultraviolet light stabilizers include the Irganox® and Tinuvin® brands from Ciba specialty chemicals. For example, Tinuvin 770 Light Stabilizer and Irganox 1010 Antioxidant.

The one part curing composition typically has a viscosity from about 50 to about 20,000 cps, for example from about 100 to about 10,000 cps, or from about 300 to about 5000 cps. These ranges provide a balance among such factors as ease of pouring, ability to generate a dome of, for instance, approximately 0.08" high, and the ability to flow to the edge of an article and stop.

When applied to a substrate, the composition provides a doming or lens effect.

The curing time of the composition depends on the thickness of the coating, the temperature and the humidity. For instance, when applied to a substrate at a thickness of about 0.08" at a temperature of 25 °C and a relative humidity of 50%, the curing time is typically less than 48 hours, less than 36 hours, and even less than 24 hours.

The composition, when cured, will typically have a hardness of between 25 Shore A, and about 90 Shore DO. As known by those skilled in the art, the hardness can be controlled with different polyols, isocyanates and silanes.

The composition may be applied to any suitable substrate where a high build, clear or pigmented, bubble free, one-component coating is desired; such as decals, logos, badges, electrical and electronic parts and other articles. Scripting and letter writing is also possible.

Substrates containing the domed resin may be used for decorative items, promotional items, decals, labels, plaques, badges, lapel pins, nameplates, signs, high-build printed and decorative lettering and designs, automotive decorations such as racing stripes and body designs and the like. Because these coatings have excellent weathering properties, items coated with them are protected and may be used in exterior applications. These coatings can be used as a protective and decorative coating. They can also be used to produce decorative lettering, scripting, and decorations directly on a substrate or they can be applied to a substrate with pressure-sensitive or other types of adhesives. They can also be used to produce molded items. Other applications would be plastic eyeglass lens, headlight lens, and taillight lens for automotive and recreational vehicles and cosmetic packaging.

The moisture curing hydrolysable silane-modified organic polymer composition can be added to two-component polyurethane and epoxy doming resins to accelerate the curing of these systems. The manufacture of two-component polyurethane and epoxy doming resin compositions are well known in the art. Generally, these compositions take 6 hours or longer, at ambient temperatures, for the surface to become tack-free at a thickness of 0.08".

It was discovered that the addition of the hydrolysable silane-modified organic polymers to the two-component polyurethane or epoxy will produce a tack-free surface in a much shorter time than unmodified two-component polyurethane and epoxy systems. For example, tack-free times as short as thirty minutes at ambient conditions were obtained.

The hydrolysable silane-modified organic polymer can be present in amounts of 5% and 95% of the total composition. The hydrolysable silane-modified organic polymer can be a separate polymer added to the isocyanate or polyol of the two-component polyurethane system. The silane can also be reacted directly onto the isocyanate or polyol of the two-component polyurethane composition and thereby partially silylating the polymer to introduce the moisture curing silane to the system.

A suitable polyurethane doming resin composition consists of the reaction of polypropylene glycols with an aliphatic diisocyanate. To facilitate the application of the chemicals in production, the glycols and diisocyanate are formulated into an easily handled two-component product. Part A, the polyol part of the two component system, is made by mixing a difunctional, trifunctional and/or tetrafunctional polypropylene glycol, adding suitable catalyst, surface active agents and light and heat stabilizing agents. After all components of the polyol are mixed together, they are heated and vacuumed under 30" of vacuum to remove all water and gasses.

Polyurethane Doming Resin

| | |
|---|---|
| Part A - Polyol | |
| Polypropylene Glycol (diol) | 44.00 |
| Polypropylene Glycol (triol) | 53.00 |
| Ultraviolet Absorber | 1.00 |
| Catalyst | 1.00 |
| Antioxidant | 1.00 |
| Surface Active Agent | 0.04 |
| | 100.04 |

In this example, a 1000 mw diol and a 423 mw triol is used. The catalyst is usually a metal compound of the group of tin, lead, zinc, mercury, and bismuth. Many different ultraviolet absorbers are suitable, such as Tinuvin P (Ciba). A suitable antioxidant is Irganox 1010 (Ciba). A suitable surface active agent is SF-96 (G.E. Silicone). The propylene glycols are available from BASF.

Part B of this formulation can be prepared by reacting an aliphatic diisocyanate with a polyol. The polyol can be a difunctional, trifunctional and/or tetrafunctional. This will form the isocyanate prepolymer. The dry polyol is mixed with the diisocyanate and heated to 90°C for one hour under 29" of vacuum.

A typical formulation is as follows:

| | |
|---|---|
| Part B - Isocyanate | |
| Polypropylene Glycol (diol) | 30.00 |
| Dicyclohexylmethane | 70.00 |
| 4,4' - diisocyanate | -------- |
| | 100.00 |

The dicyclohexylmethane 4,4' - diisocyanate is available from Bayer.

Equal volumes of Part A and Part B are mixed together in meter-mix-dispensing equipment and applied onto the surface to be domed.

Epoxy doming resin

A suitable epoxy doming resin composition consists of the reaction of an epoxy resin with amine hardeners. To facilitate the application of the chemicals in production, the epoxy resin and amine hardeners are formulated into an easily handled two-component product. Part B, the amine hardener, is usually formulated to be used in a simple volumetric ratio with the epoxy resin. A typical formulation for Part B is as follows:

Part B - Epoxy Hardener

| | |
|---|---|
| Polyoxypropyleneamine | 30.00 |
| Nonyl Phenol | 60.00 |

The above formulation is simply mixed together. Heating is not necessary. To form the epoxy doming resin, equal volumes of Part B and the epoxy resin (Part A) are mixed together and applied onto the substrate to be domed.

A suitable epoxy resin is Epon 825 (Shell Chemicals). A suitable amine hardener is Jeffamine D-230 (Texaco Chemicals).

### Example 1

A silane terminated prepolymer having a linear polyether structure was prepared by mixing together 400.8 g (0.2 equivalents) polyether diol with 37.5 g (0.3 eq.) of 4,4'-diphenylmethanediisocyanate and 0.02 g of dibutyltin dilaureate. The temperature was raised to 75 °C. and maintained for about 3 hours. Thereafter, 26.8 g (0.105 eq.) of N-Phenyl-gamma-aminopropyltrimethoxysilane was added and again the reaction temperature was maintained at 75 °C. for about 3 hours until isocyanate was no longer detected by infrared spectroscopy. The silylated prepolymer was cooled and filled into a metal container, degassed and flushed with nitrogen. The prepolymer was a clear, colorless liquid with a Brookfield Viscosity of 7,000 cps at 25 °C.

(a) To 100 grams of the above silylated polymer was added 1.5 grams gammaglycidoxypropyltrimethoxysilane, 1.0 grams dibutyl tin dilaureate, 1.0 grams TINUVIN 770 (Ciba), 0.5 grams IRGANOX 1010 (Ciba) and 1.0 grams SILWET L-77 (OSI). After all the additions, the resin was mixed well and degassed. Samples of the prepared resin were poured onto small decals. The resin flowed to the edge of the decal, forming a high build, smooth coating. The liquid resin became tack free within two hours at 25 °C. and 50% R.H. It cured within 24 h providing a clear, transparent elastomeric coating, 80 mils thick with a hardness of 40 D0 and a 60 degree gloss of 86. The coating had a high gloss and did not contain any bubbles or surface imperfections. These are typical properties seen in a good lensing resin.

In a good dome, the coating is at least 40 mils high and is transparent. Most domes are water clear but they can be tinted different colors. Most domes are high gloss, but they can also be low gloss. The dome also has a magnifying effect on the substrate.

(b) To 100 grams of the above silylated polymer was added 1.5 grams N-beta-(aminoethyl)-gamma-aminopropyltrimethoxysilane, 1.0 grams dibutyl tin dilaureate, 1.0 grams TINUVIN 770 (Ciba), 0.5 grams IRGANOX 1010 (Ciba) and 1.0 grams SILWET L-77 (OSI). After all the additions the resin was mixed well and degassed. Samples of the prepared resin were poured onto small decals. The resin flowed to the edge of the decal, forming a high build, smooth coating. The liquid resin became tack free within thirty minutes at 25 °C. and 50% R.H. It cured within 24h providing an clear, transparent elastomeric coating, 80 mils thick with a hardness of 45 D0 and a 60 degree gloss of 82. The coating had a high gloss and did not contain any bubbles or surface imperfections.

### Example 2

Three grams of vinyltrimethoxysilane, 0.01 grams of dibutyltin dilaureate and 100 grams of polyether diol were placed in a closed reaction vessel, with mixing, under a nitrogen blanket and heated to 60 °C. After one hour at 60 °C the polyol was tested with Karl Fisher Reagent to confirm that all the water had been removed. The polyol was cooled to 40 °C and 0.05 eq. isophorone diisocyanate was added. The mixture was again heated to 60 °C and held at that temperature until the NCO peak could not be detected in the FTIR spectra. The polyol was cooled to 40 °C and 9.74 grams of a 205 MW isocyanatofunctional silane were then added. A 5% excess of the polyol was used to ensure complete reaction of the isocyanate. The mixture was then heated to 60 °C until the NCO peak could not be detected in the FTIR spectra. The silylated resin was cooled, filled into a metal container, degassed and flushed with nitrogen. The polymer was clear, transparent and had a viscosity of 3800 cps at 25°C.

To 100 grams of the above silylated polymer was added 1.5 grams gammaglycidoxypropyltrimethoxysilane, 1.0 grams dibutyl tin dilaureate, 1.0 grams TNUVIN 770 (Ciba), 0.5 grams IGANOX 1010 (Ciba) and 1.0 grams SILWET L-77 (OSI). After all the additions, the resin was mixed well and degassed.

Samples of the prepared resin were poured onto small decals. The resin flowed to the edge of the decal, forming a high build, smooth coating. The liquid resin became tack free within two hours at 25 °C and 50% R.H. It cured within 24h providing a clear, transparent elastomeric coating, 80 mils thick with a hardness of 50 Shore A and a 60 degree gloss of 82. The coating had a high gloss and did not contain any bubbles or surface imperfections.

### Example 3

A silane terminated prepolymer having a linear polyether structure was prepared by mixing together 200 g (0.1 equivalents) polyether diol with 22.4 g (0.2 eq.) of isophorone diisocyanate and 0.02 g of dibutyltin dilaureate. The temperature was raised to 75 °C. and maintained for about 3 hours. Thereafter, 36 g (0.105 eq.) of bis-(gamma-trimethoxysilylpropyl)amine was added and again the reaction temperature was maintained at 75 °C. for about 3 hours until isocyanate could no longer be detected therein by infrared spectroscopy. The silylated prepolymer was cooled and filled into a metal container, degassed and flushed with nitrogen. The prepolymer was a clear, colorless liquid with a Brookfield Viscosity of 10,000 cps at 25 °C.

To 100 grams of the above silylated polymer was added 10 grams diisodecyl phthalate, 1.5 grams N-beta-(aminoethyl)-gamma-aminopropylmethyldimethoxysilane, 2 grams dibutyl tin dilaureate, 1.0 grams TINWIN 213 (Ciba), 1.0 grams TINUVIN 622 and 1.0 grams SILWET L-77 (OSI). After all the additions, the resin was mixed well and degassed.

Samples of the prepared resin were poured onto small decals. The resin flowed to the edge of the decal, forming a high build, smooth coating. The liquid resin became tack free within two hours at 25 °C and 50% R.H. It cured within 24 h providing a clear, transparent elastomeric coating, 80 mils thick with a hardness of 50 Shore D0 and a 60 degree gloss of 83. The coating had a high gloss and did not contain any bubbles or surface imperfections.

### Example 4

A polyurethane prepolymer was prepared by mixing together 500 g (1.0 equivalents) polyether diol with 896 g (8.0 eq.) of isophorone diisocyanate and 0.02 g of dibutyltin dilaureate. The temperature was raised to 75 °C. and maintained for about 3 hours. Thereafter, 342 g (1.0 eq.) of bis-(gamma-trimethoxysilylpropyl)amine was added and again the reaction temperature was maintained at 75 °C. for about 3 hours. The partially silylated isocyanate prepolymer was cooled and filled into a metal container, degassed and flushed with nitrogen. The prepolymer was a clear, colorless liquid with a Brookfield Viscosity of 2,000 cps at 25 °C.

100 grams (0.345 eq.) of the above isocyanate was mixed well with 100 grams (0.345 eq.) of the polyurethane doming resin polyol, containing 2.0% dibutyltin dilaureate catalyst. Samples of the prepared resin were poured onto small decals. The resin flowed to the edge of the decal, forming a high build, smooth coating. The liquid resin became tack free within two hours at 25 °C. and 50% R.H. It cured within 24 h providing a clear, transparent elastomeric coating, 0.08" mils thick with a hardness of 50 Shore D and a 60 degree gloss of 86. The coating had a high gloss and did not contain any bubbles or surface imperfections. A sample of the same polyurethane doming resin prepared without silylating the isocyanate became tack free in 12 hours at 25 °C and 50% R.H.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. A one-part, transparent, moisture-curing doming resin composition comprising a mixture of crosslinkable hydrolyzable-silane-modified organic polymers; wherein the resin composition has a viscosity between about 100 cps and about 20,000 cps; and wherein the composition forms a coating having a hardness of Shore A 25 to Shore D 90.

2. A composition according to claim 1 wherein the crosslinkable hydrolyzable-silane-modified organic polymer is prepared by reacting an isocyanate-functional monomer, oligomer, or polymer with at least one hydrolysable silane selected from the group consisting of mono-, di-, or tri-alkoxysilanes, mono-, di-, or tri-aryloxysilanes, mono-, di-, or tri-acetoxysilanes, and mixtures thereof.

3. A composition according to claim 2 wherein the hydrolysable silane is selected from the group consisting of an aminoalkyl triallcoxysilane, aminoalkyl dialkoxysilane, mercaptoalkyl trialkoxysilane, mercaptoalkyl dialkoxysilane and mixtures thereof.

4. A composition according to claim 1 wherein the crosslinkable hydrolysable-silane-modified organic polymer is prepared by reacting at least one polyol with an isocyanatoalkyl dialkoxysilane, isocyanatoalkyl trialkoxysilane, or mixtures thereof.

5. A composition according to claim 4 wherein the polyol is at least one selected from the group consisting of polyester polyols, polyether polyols, and polyalkyldiene polyols, or the polyol is derived from reaction of an excess of at least one selected from the group consisting of polyester polyols, polyether polyols, and polyalkyldiene polyols, with at least one isocyanate functional compound.

6. The composition according to claim 1 wherein the crosslinkable hydrolysable-silane-modified organic polymer is prepared by reacting a hydride-functional mono-, di-, or tri- hydroalkoxy silane or a vinyl silane with an unsaturated monomer, polymer or oligomer.

7. The composition according to claim 1 further comprising at least one catalyst.

8. The composition of claim 7 wherein the at least one catalyst is at least one selected from organotin catalysts and amine catalysts.

9. The composition according to claim 1 further comprising at least one selected from the group consisting of flow agents, viscosity modifiers, foam control agents, plasticizing agents, moisture scavengers, adhesion promoters, temperature stabilizers, and ultraviolet radiation stabilizers.

10. A composition according to claim 1 wherein the composition is essentially clear and colorless.

11. A composition according to claim 1 further comprising an effective amount of at least one colorizing additive.

12. A composition according to claim 1 wherein the composition is solvent-free.

13. An article comprising a substrate and a transparent coating; wherein the coating is prepared from a one-part doming resin composition comprising a mixture of crosslinkable hydrolyzable-silane-modified organic polymers having a viscosity between about 100 cps and about 20,000 cps; wherein the coating is moisture-cured and has a hardness of Shore A 25 to Shore D 90.

14. The article according to claim 13 wherein the article is selected from the group consisting of decals, labels, plaques, badges, name plates, lapel pins, automotive dash kits and construction tiles.

15. The article according to claim 13 wherein the article is selected from the group consisting of promotional items and decorative items.

16. The article according to claim 13 wherein the wherein the thickness of the coating is about 0.5 mm to about 10 mm.

17. An article according to Claim 15 wherein the resin is cured in a mold.

18. A polymer coating composition comprising a two-component epoxy or polyurethane polymer and a sufficient amount of a crosslinkable hydrolyzable-silane-modified organic polymer to reduce the tack-free time.

19. The composition according to Claim 18 wherein the of crosslinkable hydrolyzable-silane-modified organic polymer comprises 5% to 95% of the total polymer composition.

20. A method of decreasing cure-time of a two-part polyurethane or epoxy resin composition comprising adding to the composition a sufficient amount of a crosslinkable hydrolyzable-silane-modified organic polymer to reduce the tack-free time.
